# FASCICULE DE BREVET EUROPEEN

(11) **EP 0 827 686 B1**
(45) Date de publication et mention de la délivrance du brevet: **27.06.2001**
(21) Numéro de dépôt: 97430021.2
(22) Date de dépôt: 25.08.1997
(51) Int. Cl.: A01G 9/24

(54) **Dispositif d'aération pour serres à écran souple s'enroulant de bas en haut**
Sich nach oben einwickelnde Lüftungseinrichtung für Gewächshäuser mit flexiblen Wänden
Upwardly winding ventilating device for greenhouses with flexible walls

(30) Priorité: 06.09.1996 FR 9611099
(43) Date de publication de la demande: 11.03.1998
(73) Titulaire: SERRES DE FRANCE (SA), F-13810 Eygalières (FR)
(72) Inventeur: Richel, Christian, 13810 Eygalières (FR)
(74) Mandataire: Roman, Michel

(56) Documents cités:
- EP-A- 0 524 126
- DE-U- 8 914 579
- FR-A- 2 727 825

## Description

La présente invention a pour objet un dispositif d'aération pour serres à écran souple s'enroulant de bas en haut.

Il concerne le domaine industriel et commercial de la fabrication des serres horticoles et est destiné en particulier à contrôler le renouvellement d'air des serres chapelles de toutes dimensions mais peut également s'appliquer à d'autres types de serres, tels que les serres de type tunnel.

Il existe à ce jour de nombreux systèmes d'aération de serres par écrans souples ou "rideaux". La plupart de ces systèmes sont rustiques et ne permettent pas de réaliser le blocage total et l'étanchéité du "rideau" lorsque l'aération est fermée.

Certaines réalisations connues utilisent un écran constitué d'un film souple, le plus souvent en matière synthétique, fixé sur la serre en partie haute et s'enroulant sur un tube mobile verticalement disposé à la partie inférieure de ce film. Il est généralement prévu un système d'accrochage destiné à maintenir l'écran en position fermée et consistant en une série de butées disposées au bas de la paroi de la serre, retenant le tube d'enroulement de façon à permettre, en le faisant tourner dans un sens déterminé, de tendre le rideau afin qu'il plaque bien contre la paroi de la serre pour assurer une fermeture correcte.

Ce montage présente l'avantage de pouvoir être actionné par un moteur aisément programmable permettant de régler l'ouverture de l'écran et d'assurer son blocage en position fermée en agissant uniquement sur le sens de rotation. En effet, les butées sont disposées de manière à ce que, si l'on continue à faire tourner le tube d'enroulement dans le sens provoquant la fermeture après que l'écran ait été entièrement déroulé, celui-ci s'enroule à nouveau en provoquant la remontée du tube qui vient se loger derrière les butées où il se bloque, l'ouverture du système d'aération s'effectuant en inversant le sens de rotation de manière à dérouler à nouveau entièrement l'écran et à l'enrouler sur le tube dans le sens contraire, ce qui lui permet de passer par dessus les butées.

Le système donne en général satisfaction, mais en cas de vent dépassant une certaine force, il devient impossible de procéder au blocage du tube d'enroulement, ce qui nécessite le plus souvent une intervention manuelle. De plus, en position partiellement ouverte, le tube bat contre la structure métallique de la serre en provoquant une usure prématurée du rideau par frottement, et en produisant un bruit très désagréable pour les personnes se trouvant à proximité.

Plusieurs systèmes ont été imaginés afin d'éviter le déplacement du tube d'enroulement en cas de vent, tels que tiges de maintien placées parallèlement à la paroi, lames métalliques élastiques ou sangles en polyester tissé, mais aucun d'eux n'a donné satisfaction.

Un dispositif d'aération, pour serres à écran souple s'enroulant de bas en haut est par exemple décrit dans le document FR-A- 2 727 825.

Le dispositif selon la présente invention a pour objectif de remédier à cet état de choses. Il permet en effet de réaliser des écrans d'aération à enroulement, dans lesquels le tube d'enroulement est appliqué avec une pression constante sur la paroi de la serre, qu'elle soit verticale ou courbe, dans toutes les positions d'ouverture, permettant ainsi au système de fonctionner par tous les temps et en particulier de pouvoir être bloqué en position fermée même en présence d'un vent violent.

Il est constitué de sangles élastiques à tension réglable fixées en parties haute et basse de la paroi de la serre, côté extérieur, et passant par dessus le tube d'enroulement mobile de l'écran souple de manière à appliquer sur celui-ci une force constante quelle que soit sa position, le blocage à la fermeture étant de préférence assuré par une pièce d'accrochage continue disposée au bas de la paroi de la serre et sous laquelle vient se bloquer le tube d'enroulement.

Sur les dessins schématiques annexés, donnés à titre d'exemple non limitatif d'une des formes de réalisation de l'objet de la présente demande :
la figure 1 est une vue en perspective d'une serre de type chapelle équipée d'un écran latéral conforme à l'invention
les figures 2 et 3 représentent à plus grande échelle, respectivement de face et de côté, une sangle élastique avec écran en position partiellement ouverte
et les figures 4 et 5 sont des agrandissements des figures 2 et 3 respectivement, montrant la partie basse d'une sangle élastique avec le tube d'enroulement bloqué en position fermée.

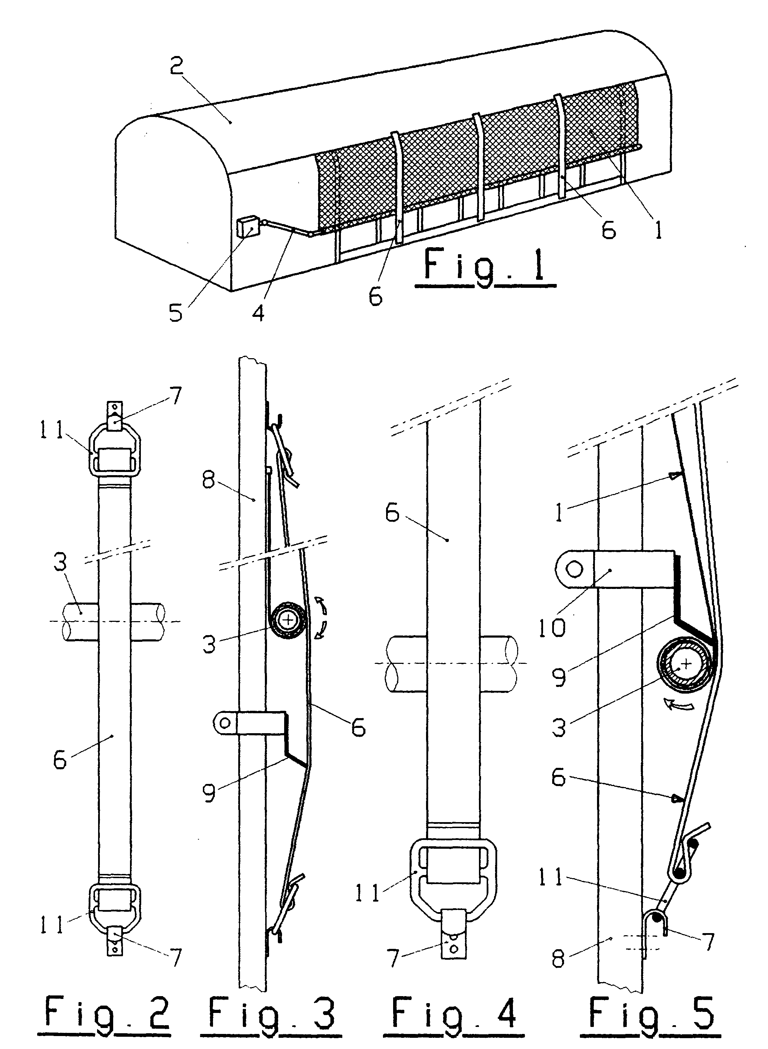

Le dispositif, figures 1 à 5, est constitué d'un écran souple 1 fixé à la partie supérieure de la paroi latérale d'une serre 2 de type "chapelle" et s'enroulant de bas en haut sur un tube 3 mobile verticalement, entraîné en rotation par un arbre articulé 4 actionné par un mécanisme 5 manuel ou motorisé.

Cet ensemble est appliqué contre la paroi de la serre par des sangles élastiques 6, par exemple en élastomère ou en caoutchouc, tendues entre deux crochets 7 fixés sur l'ossature 8, au dessus et au dessous de l'ouverture d'aération. A la partie inférieure de la paroi, sont montées des pièces de blocage 9 constituées d'éléments inclinés vers le bas jouant le rôle de butées retenant le tube d'enroulement.

Lors de la fermeture de l'aération, l'écran 1 est déroulé et le tube 3 descend entre la paroi de la serre 2 et les sangles élastiques 6 jusqu'à dépasser les pièces de blocage. Une fois entièrement déroulé, l'écran s'enroule à nouveau en provoquant une remontée du tube qui vient se bloquer sous les pièces de blocage (figure 5). Lors de l'ouverture de l'aération, l'élasticité des sangles 6 permet le passage du tube d'enroulement 3 au droit des pièces de blocage 9 et la pression exercée maintiendra ensuite ce tube au long de la paroi.

L'utilisation des sangles élastiques permet d'envisager un système de blocage continu formé d'un profilé unique ou de plusieurs éléments montés bout à bout, fixés sur l'ossature 8 grâce à des brides 10 à position ajustable, ou tout autre moyen adéquat, et courant à la partie basse de la paroi de la serre sur toute la longueur du tube d'enroulement 3. Cette disposition permet un excellent maintien de l'écran souple 1 même par vent fort.

Les sangles élastiques 6 seront avantageusement fixées aux crochets 7 par des boucles de sangles 11 de type connu permettant d'ajuster leur tension à tout moment, en particulier pour compenser périodiquement le vieillissement du matériau au cours du temps.

Le système décrit présente l'avantage de s'adapter sans modification aussi bien à une paroi verticale qu'à une paroi partiellement ou entièrement courbe (serres tunnel), ou encore à la toiture d'une serre.

Le positionnement des divers éléments constitutifs donne à l'objet de l'invention un maximum d'effets utiles qui n'avaient pas été, à ce jour, obtenus par des dispositifs similaires.

## Revendications

1. Dispositif d'aération pour serres à écran souple s'enroulant de bas en haut, destiné en particulier à contrôler le renouvellement d'air des serres de type "chapelle" mais pouvant s'appliquer à d'autres types de serres, de toutes dimensions, à parois verticales ou courbes, serres de type "tunnel", par exemple,
caractérisé en ce que l'écran souple (1) et son tube d'enroulement (3) mobile sont maintenus contre la paroi de la serre (2) par des sangles élastiques (6) fixées en parties haute et basse de ladite paroi, côté extérieur, et passant par dessus ledit tube d'enroulement de manière à appliquer sur celui-ci une force constante quelle que soit sa position.

2. Dispositif selon la revendication 1, se caractérisant par le fait qu'il comporte un système de blocage continu formé d'un profilé unique ou de plusieurs éléments (9) montés bout à bout, fixés sur l'ossature (8) de la serre (2) et courant à la partie basse de l'ouverture d'aération sur toute la longueur du tube d'enroulement (3), ce système de blocage étant agencé pour permettre au dit tube d'enroulement de le contourner à l'ouverture et à la fermeture de l'écran souple (1) et de se bloquer dessous lorsque, après déroulage complet, la rotation est maintenue dans le même sens en provoquant un réenroulement.

3. Dispositif selon la revendication 2, se caractérisant par le fait que le ou les élément(s) de blocage (9) sont fixés sur l'ossature (8) de la serre (2) au moyen de brides (10) à position ajustable.

4. Dispositif selon l'une quelconque des revendications précédentes, se caractérisant par le fait que les sangles élastiques (6) sont fixées par l'intermédiaire des boucles de sangles (11) de type connu permettant d'ajuster leur tension à tout moment, par exemple pour compenser le vieillissement du matériau au cours du temps.

5. Dispositif selon l'une quelconque des revendications précédentes, se caractérisant par le fait que les sangles élastiques (6) sont réalisées en élastomère ou en caoutchouc.

6. Dispositif selon l'une quelconque des revendications précédentes, se caractérisant par le fait que l'écran souple (1) est monté sur une paroi verticale de serre.

7. Dispositif selon l'une quelconque des revendications 1 à 5, se caractérisant par le fait que en ce que l'écran souple (1) est monté sur une toiture de serre.

## Claims

1. Ventilation device for greenhouses with flexible screen winding upwards, intended in particular to control the renewal of air in greenhouses of the "chapel"-type but being able to be applied to other types of greenhouses, of all dimensions with vertical or curved walls, for instance "tunnel"-type greenhouses,
characterized in that the flexible screen (1) and the mobile winding tube (3) are maintained against the greenhouse wall (2) by elastic belts (6) fixed in the upper and lower parts of the aforesaid wall, on the outside, and passing over the aforementioned winding tube so that they apply on it a constant force whatever its position.

2. Device according to claim 1, characterized by the fact that
it comprises a continuous blocking system formed of a single section and several elements (9) assembled end to end, fixed on the frame (8) of the greenhouse (2) and running in the lower part of the ventilation opening over the entire length of the winding tube (3), this blocking system being arranged to allow the said winding tube to by-pass it on opening and closing of the flexible screen (1) and to be blocked above it when, after complete unwinding, rotation is maintained in the same direction causing rewinding to take place.

3. Device according to claim 2 characterized by the fact that the blocking elements (9) are fixed on the frame (8) of the greenhouse (2) by means of supports (10) with adjustable position.

4. Device according to any of the preceding claims, characterized by the fact that the elastic belts (6) are fixed by means of belt loops (11) of known type so that their tension can be adjusted at all times, for instance to compensate for ageing of the material over a period of time.

5. Device according to any one of the preceding claims being characterized by the fact that the elastic belts (6) are made out of elastomer or rubber.

6. Device according to any of the preceding claims characterized by the fact that the flexible screen (1) is fitted on a vertical wall of the greenhouse.

7. Device according to any of claims 1 to 5 characterized in that the flexible screen (1) is fitted on a roof of the greenhouse.

## Patentansprüche

1. Lüftungsvorrichtung für Gewächshäuser mit von unten nach oben aufrollbarer Folienabdeckung, insbesondere dazu bestimmt, den Luftwechsel in Gewächshäusern des Typs "Chapelle" zu regulieren, die jedoch ebenfalls für andere Gewächshaustypen jeglicher Abmessungen, mit senkrechten oder gebogenen Wandungen, wie z.B. "Tunnel"-Gewächshäuser, angewendet werden können, dadurch gekennzeichnet,
daß die Folie (1) und das bewegliche Aufrollrohr (3) gegen die Wandung des Gewächshauses (2) mit Hilfe von elastischen Gurten (6) befestigt sind, die an der Außenseite im oberen und im unteren Teil der besagten Wandung und über das besagte Aufrollrohr laufen und somit in jeder Stellung eine konstante Kraft auf dieses ausüben.

2. Lüftungsvorrichtung gemäß Anspruch 1, dadurch gekennzeichnet, daß sie ein kontinuierliches Blockiersystem aufweist, das aus einem oder mehreren endweise montierten Profilen (9) gebildet wird, welche an der Tragkonstruktion (8) des Gewächshauses (2) befestigt sind, und am unteren Teil der Lüftungsöffnung über die gesamte Länge des Aufrollrohrs (3) läuft, wobei dieses Blockiersystem so angeordnet ist, daß das besagte Aufrollrohr beim Öffnen und Schließen der Folie (1) es umlaufen und sich darunter blockieren kann, wenn, nach völligem Abrollen, die Drehung in gleicher Richtung fortgesetzt wird und damit ein erneutes Aufrollen verursacht.

3. Lüftungsvorrichtung gemäß Anspruch 2, dadurch gekennzeichnet, daß das bzw. die Blockierelemente (9) an der Tragkonstruktion (8) des Gewächshauses (2) mittels in der Position einstellbaren Schellen (10) befestigt sind.

4. Lüftungsvorrichtung gemäß irgendeinem der vorhergehenden Ansprüche, dadurch gekennzeichnet, daß die elastischen Gurte (6) mit Gurtschnallen (11) bekannter Art befestigt sind, die ermöglichen, jederzeit die Spannung der Gurte nachzustellen, zum Beispiel, um das Altern des Werkstoffs im Lauf der Zeit auszugleichen.

5. Lüftungsvorrichtung gemäß irgendeinem der vorhergehenden Ansprüche, dadurch gekennzeichnet, daß die elastischen Gurte (6) aus Elastomer oder aus Gummi hergestellt sind.

6. Lüftungsvorrichtung gemäß irgendeinem der vorhergehenden Ansprüche, dadurch gekennzeichnet, daß die Folie (1) auf eine senkrechte Wandung des Gewächshauses gespannt ist.

7. Lüftungsvorrichtung gemäß irgendeinem der vorhergehenden Ansprüche 1 bis 5, dadurch gekennzeichnet, daß die Folie (1) auf ein Dach des Gewächshauses gespannt ist.
